# EUROPÄISCHE PATENTSCHRIFT

(11) **EP 0 375 719 B1**
(45) Veröffentlichungstag und Bekanntmachung des Hinweises auf die Patenterteilung: **21.04.1993**
(21) Anmeldenummer: 88907680.8
(22) Anmeldetag: 20.08.1988
(51) Int. Cl.: A01B 15/14

(54) **PFLUG**
PLOUGH
CHARRUE

(30) Priorität: 28.08.1987 DE 3728790; 19.11.1987 DE 3739141
(43) Veröffentlichungstag der Anmeldung: 04.07.1990
(73) Patentinhaber: Bayerische Pflugfabrik GmbH, 86899 Landsberg (DE)
(72) Erfinder: PÖTTINGER, Klaus, A-4710 Grieskirchen (AT)
(74) Vertreter: Dupal, Helmut, Dipl-Ing.
(86) Internationale Anmeldenummer: EP8800743
(87) Internationale Veröffentlichungsnummer: WO8901733

(56) Entgegenhaltungen:
- DE-U- 8 631 070
- FR-A- 2 523 398
- FR-A- 2 551 305
- GB-A- 2 170 684

## Beschreibung

Die Erfindung betrifft einen Pflug mit den Merkmalen des Oberbegriffes des Anspruches 1.

Bei bekannten Pflügen dieser Art erfolgt die Verstellung der Schnittbreite über eine Koppelstange, mit der die Pflugkörper eines Pfluges gleichzeitig verstellt werden, gewöhnlich vom ersten Pflugkörper aus, mit einer Verstellvorrichtung, die am Rahmen angelenkt ist oder durch Veränderung des Winkels den die Koppel mit dem Pflugrahmen einschließt. Dabei verstellen sich aber der Drehpol und die ideelle Zuglinie des Pfluges und der Führungspol der Unterlenker, sodaß weitere Nachstellungen erforderlich sind.

Aus der GB-A-2170684 ist ein Pflug dieser genannten Art bekannt, bei dem ein Gelenkviereck zur Einstellung der ideellen Zuglinie des Pfluges und damit des Drehpoles des Gelenkviereckes vorgesehen ist, dessen Kopplung mit der Stellstange für die Arbeitsbreitenverstellung aller Pflugkörper über eine Verlängerung der hinteren Querstrebe des Gelenkviereckes erfolgt, wodurch allerdings die Länge der Hebelverbindung mit den einzelnen Pflugkörpern festgelegt ist.

Die Verstellung des Gelenkviereckes ist nur durch Verstellen von zwei außerhalb angeordneten Verstellelementen möglich, die gegensinnig wirken und die Einstellung der Vorfurchenbreite und der ideellen Zuglinie sehr schwierig und während der Arbeit sogar unmöglich machen.

Ein weiterer Pflug mit einer Vorrichtung dieser Art ist aus der DE-A 3331534 bekannt, bei dem ein Längslenker des Gelenkviereckes in der Länge verstellbar ist, wodurch die Schnittbreite verstellt wird und gleichzeitig eine Veränderung des Drehpoles des Pfluges auftritt.

Aufgabe der Erfindung ist es einen Pflug der eingangs erwähnten Art zu schaffen, bei dem bei Verstellung der Arbeitsbreite, sowohl die Vorfurchenbreite entsprechend mitverstellt wird, als auch die ideelle Zuglinie, zwischen dem ideellen Kraftangriffspunkt und dem Führungspol des Schleppers einen annähernd gleichbleibenden Schnittpunkt mit der Schlepperhinterachse ergibt.

Die Erfindung löst diese Aufgabe mit einem Pflug nach dem Gattungsbegriff des Anspruches 1 mit den Merkmalen des kennzeichnenden Teiles des Anspruches 1.

Wesentliche oder besonders vorteilhafte Ausgestaltungen der Erfindung sind in den Unteransprüchen 2 bis 5, die gleichzeitig Teil der Beschreibung sind, beansprucht.

Die Kopplung der Vorrichtung zur Verstellung der Arbeitsbreite aller Pflugkörper mit dem Gelenkviereck zur Einstellung des Pfluges und besonders mit dessen Einstellelement, sowie mit dem Einstellglied zur Verstellung der Vorfurchenbreite des Pfluges erlaubt eine genaue Anpassung der Einstellung des Pfluges und der Arbeitsbreite im gesamten Verstellbereich der Verstellgrößen. Die Berichtigung der Einstellung des Pfluges bei Verstellung der Arbeitsbreite aller Pflugkörper wird zudem bei beliebigen Pflugabmessungen möglich, sodaß ein-und dieselbe Anordnung für mehrere Pflugtypen Anwendung finden kann.

Die Art der Anlenkung des Übertragungshebels an der hinteren Querstrebe des Gelenkviereckes macht die genaue Anpassung und Nachführung der Pflugkörper möglich, wobei einfach und wirksam die Anlenkung am koppelstangenseitigen Ende des Verstellgliedes für die Arbeitsbreitenverstellung der Pflugkörper ist.

Eine weitere Verbesserung der Anpassung besteht in der Anlenkung des längenveränderbaren Einstellgliedes zur Einstellung der Vorfurchenbreite an dem vorderen Ende des Übertragungshebels, die damit ebenfalls korrigiert wird.

Besonders wichtig ist dabei, daß bei Verstellung des Gelenkviereckes die Einstellung der Vorfurchenbreite und bei Verstellung des längenveränderbaren Einstellgliedes der Schnittpunkt der ideellen Zuglinie mit der geometrischen Hinterachse des Schleppers unverändert bleibt.

Für die Anpassung an unterschiedliche Pfluggeometrien ist die vorzugsweise stufenlose Veränderbarkeit der Hebelabstände der Anlenkungen an dem Übertragungshebel von Vorteil.

Die Erfindung wird nachstehend an Hand der Zeichnung eines Ausführungsbeispieles beschrieben.

Es zeigt:

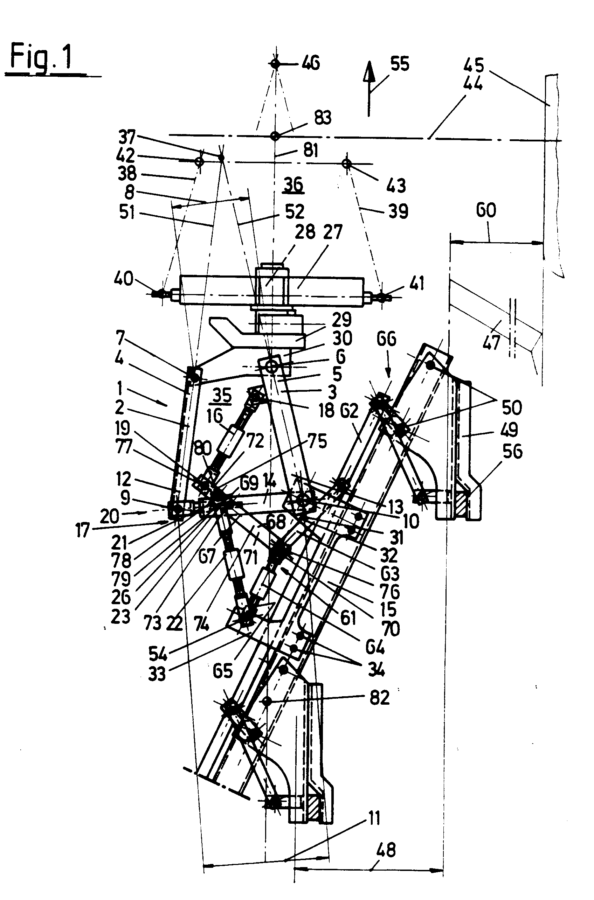

- Fig. 1: eine Draufsicht auf einen Pflug, angehängt an einen Schlepper, bei dem die Pflugkörper weggelassen wurden und die Unterlenker und deren Gelenke, ebenso wie die Schlepperachse und der Führungspol schematisch dargestellt sind und

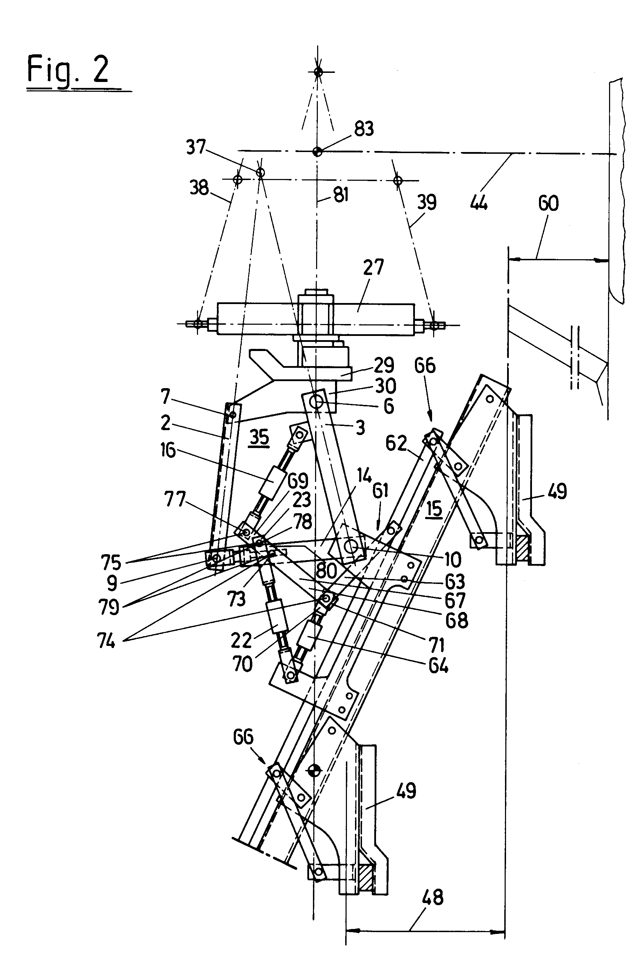

- Fig. 2: einen Ausschnitt aus der Draufsicht nach Fig.1, vergrößert und auf die Bezeichnung mit Bezugsziffern der Ansprüche beschränkt.

An einem Schlepper, dessen Hinterachse 44 angedeutet und dessen rechtes Hinterrad 45 teilweise angedeutet ist, sind die am Schlepper angebrachten Gelenke 42 und 43 der beiden Unterlenker 38 und 39 des Gelenkviereckes 36 der Dreipunktanhängung des Schleppers bezeichnet, deren koppelseitige Gelenke 40 und 41 sich beiderseits an der Koppel 27 befinden; der obere Anlenkpunkt ist zur Vereinfachung weggelassen.

Die Verlängerung der Unterlenker 38 und 39 ergibt einen Schnittpunkt in Fahrtrichtung 55, der den Führungspol 46 des Gelenkviereckes 36 bildet.

In der Koppel 27 ist eine Wendeachse 28 gelagert, an der ein Wendekörper 29 pflugseitig befestigt ist, an dem eine seitlich auskragende Konsole 30 angebracht ist, an der ein pflugseitiges Gelenkviereck 35, welches Teil der Vorrichtung 1 zur Verstellung des Drehpoles 37 des Pfluges und des Führungspoles 46 des Schleppers ist, angeordnet ist, dessen Längslenker 2 und 3 an ihren vorderen Enden 4 und 5 mit den vorderen Schwenkachsen 6 und 7 verschwenkbar angelenkt sind.

Die hinteren Schwenkachsen 9 und 10 sind an den hinteren Enden 12 und 13 der Längslenker 2 und 3 an einer hinteren Querstrebe 14 angelenkt. An der Schwenkachse 10 ist mit der Querstrebe 14 der Längslenker 3 an einer vorderen Konsole 32 eines Rahmenhalters 31, der am Rahmen 15 mit den Verschraubungen 34 befestigt ist, angelenkt.

Im Gelenkviereck 35 ist der Abstand zwischen den hinteren Schwenkachsen 9 und 10 größer bemessen als der Abstand der vorderen Schwenkachsen 6 und 7, so daß die verlängerten Längsachsen 51 und 52 der Längslenker 2 und 3 einen Schnittpunkt in Fahrtrichtung 55 ergeben, der den Drehpol 37 des Gelenkviereckes 36 bildet.

Die Querstrebe 14 ist an ihrem, dem Rahmen 15 abgewandten Ende 26 mit der Lagerstelle 21 der längenveränderbaren Einstellvorrichtung 17 versehen, die andernends über die Schwenkachse 9, die die Anlenkstelle 20 für das hintere Ende 12 des Längslenkers 2 bildet, mit diesem verschwenkbar verbunden ist.

Das Einstellelement 16 des Gelenkviereckes 35 ist mit der vorderen Anlenkstelle 18 an dem vorderen Ende 5 des Längslenkers 3 verschwenkbar befestigt.

Die hintere Anlenkstelle 19 des längenveränderbaren Einstellelementes 16 ist am Ende 72 des gelenkviereckseitigen Armes 69 eines dreiarmigen Übertragungshebels 67 im Anlenkpunkt 77 angelenkt, der auf der hinteren Querstrebe 14 mit einer Gelenkachse 73 verschwenkbar gelagert ist. Mit dem Ende 71 des zweiten verstellgliedseitigen Armes 68 des Übertragungshebels 67 ist dieser mit einer Anlenkstelle 76 an dem koppelstangenseitigen Ende 70 eines Verstellgliedes 64 der Vorrichtung 1 zur Verstellung der Arbeitsbreite 48 aller Pflugkörper angelenkt, mit dem gleichzeitig eine Koppelstange 63 angelenkt ist, die andernends an einer Stellstange 62 gelenkig befestigt ist, die die Verstellgetriebe 66 der Pflugkörper bei Verstellung des Verstellgliedes 64 antreibt. Mit dem anderen Ende 65 ist das Verstellglied 64 an der Schwenkachse 54 der hinteren Konsole 33 des Rahmenhalters 31 angelenkt.

Das längenveränderbare Einstellglied 22 zur Einstellung der Vorfurchenbreite 60 ist mit dem vorderen Ende 23 auf dem einstellgliedseitigen Arm 80 des Übertragungshebels 67 an einer Anlenkstelle 78 verbunden, die zwischen dem Anlenkpunkt 77 und der Gelenkachse 73 liegt, wobei der einstellgliedseitige Arm 80 mit dem gelenkviereckseitigen Arm 69 baulich vereint ist.

Das Verhältnis des Abstandes 74 zwischen der Gelenkachse 73 und der Anlenkstelle 76 einerseits und des Abstandes 75 zwischen der Gelenkachse 73 und dem Anlenkpunkt 77, sowie des Abstandes 79 zwischen der Gelenkachse 73 und der Anlenkstelle 78 andererseits, ist so bemessen, daß in Abstimmung mit dem Verstellgetriebe 66 und dem Verstellglied 64 der Vorrichtung 61 zur Arbeitsbreitenverstellung die Verstellung der Vorfurchenbreite 60 und des Drehpoles 37 sowie des Führungspoles 46 bei Verstellung der Arbeitsbreite 48 aller Pflugkörper vollständig ausgeglichen, d.h. berichtigt werden, so daß die ideelle Zuglinie 81, welche den ideellen Kraftangriffspunkt 82 des Pfluges mit dem Führungspol 46 verbindet, in dem voreingestellten Schnittpunkt 83 mit der geometrischen Hinterachse 44 des Schleppers verbleibt, bzw. sich wieder dahin einstellt.

Am Rahmen 15 des Pfluges sind die Pflugkörperhalter 49 mit Verschraubungen 50 befestigt, an denen die Pflugkörperstiele 56 befestigt sind, die die Pflugkörper tragen. Das Schar 47 des vordersten Pflugkörpers ist angedeutet.

Das Verstellglied 64 ist in bekannter Weise als Stellschraubspindel ausgeführt, kann jedoch auch als hydraulisches Verstellmittel ausgebildet sein.

### Verzeichnis der Bezugszeichen :

- 1: Vorrichtung zur Verstellung des Drehpoles 37 und der ideellen Zuglinie 81
- 2: Längslenker dem Rahmen 15 abgewandt
- 3: Längslenker dem Rahmen 15 zugewandt
- 4: vorderes Ende des Längslenkers 2
- 5: vorderes Ende des Längslenkers 3
- 6: vordere Schwenkachse des Längslenkers 2
- 7: vordere Schwenkachse des Längslenkers 3
- 8: Abstand zwischen den vorderen Schwenkachsen 6 und 7
- 9: hintere Schwenkachse des Längslenkers 2
- 10: hintere Schwenkachse des Längslenkers 3
- 11: Abstand zwischen den hinteren Schwenkachsen 9 und 10
- 12: hinteres Ende des Längslenkers 2
- 13: hinteres Ende des Längslenkers 3
- 14: hintere Querstrebe
- 15: Rahmen des Pfluges
- 16: längenveränderbares Einstellelement des Gelenkviereckes 35
- 17: längenveränderbare Einstellvorrichtung für den Abstand 11
- 18: vordere Anlenkstelle des längenveränderbaren Einstellelementes 16
- 19: hintere Anlenkstelle des längenveränderbaren Einstellelementes 16
- 20: Anlenkstelle der längenveränderbaren Einstellvorrichtung 17 dem Längslenker 2 zugewandt
- 21: Lagerstelle der längenveränderbaren Einstellvorrichtung 17 dem Längslenker 3 zugewandt
- 22: längenveränderbares Einstellglied der hinteren Querstrebe 14 zur Einstellung der Vorfurchenbreite
- 23: vorderes Ende des längenveränderbaren Einstellgliedes 22
- 24:
- 25:
- 26: Ende der Querstrebe 14, der Einstellvorrichtung 17 zugewandt und dem Rahmen 15 abgewandt
- 27: Pflugkoppel
- 28: Wendeachse
- 29: Wendekörper
- 30: Konsole des Wendekörpers 29
- 31: Rahmenhalter
- 32: vordere Konsole des Rahmenhalters 31
- 33: hintere Konsole des Rahmenhalters 31
- 34: Verschraubungen des Rahmenhalters 31
- 35: Gelenkviereck des Pfluges
- 36: Gelenkviereck des Schleppers
- 37: Drehpol des Gelenkviereckes 35 des Pfluges
- 38: linker Unterlenker des Schleppers
- 39: rechter Unterlenker des Schleppers
- 40: koppelseitiges Gelenk des Unterlenkers 38
- 41: koppelseitiges Gelenk des Unterlenkers 39
- 42: schlepperseitiges Gelenk des Unterlenkers 38
- 43: schlepperseitiges Gelenk des Unterlenkers 39
- 44: geometrische Hinterachse des Schleppers
- 45: rechtes Hinterrad des Schleppers
- 46: Führungspol des Gelenkviereckes 36 der Unterlenker 38 und 39
- 47: Schar
- 48: Arbeitsbreite aller Pflugkörper
- 49: Pflugkörperhalter
- 50: Pflugkörperverschraubung
- 51: Längsachse des Längslenkers 2
- 52: Längsachse des Längslenkers 3
- 53:
- 54: Schwenkachse
- 55: Fahrtrichtung
- 56: Pflugkörperstiel
- 57:
- 58:
- 59:
- 60: Vorfurchenbreite
- 61: Vorrichtung zur Verstellung der Arbeitsbreite pro Körper
- 62: Stellstange
- 63: Kopplungsstange
- 64: Verstellglied für die Arbeitsbreitenverstellung der Pflugkörper
- 65:
- 66: Verstellgetriebe des Pflugkörpers
- 67: Übertragungshebel
- 68: verstellgliedseitiger Arm des Übertragungshebels 67
- 69: gelenkviereckseitiger Arm des Übertragungshebels 67
- 70: koppelstangenseitiges Ende des Verstellgliedes 64
- 71: Ende des verstellgliedseitigen Armes 68
- 72: Ende des gelenkviereckseitigen Armes 69
- 73: Gelenkachse des Übertragungshebels 67 auf der hinteren Querstrebe 14
- 74: Abstand zwischen der Gelenkachse 73 und der Anlenkstelle 76 des verstellgliedseitigen Armes 68
- 75: Abstand zwischen der Gelenkachse 73 und dem Anlenkpunkt 77 der hinteren Anlenkstelle 19 des längenveränderbaren Einstellelementes 16
- 76: Anlenkstelle des verstellgliedseitigen Armes 68
- 77: Anlenkpunkt des gelenkviereckseitigen Armes 69 des Übertragungshebels 67 mit der hinteren Anlenkstelle 19 des längenveränderbaren Einstellelementes 16 des Gelenkviereckes 35
- 78: Anlenkstelle des vorderen Endes 23 des längenveränderbaren Einstellgliedes 22
- 79: Abstand zwischen Gelenkachse 73 und Anlenkstelle 78
- 80: einstellgliedseitiger Arm des Übertragungshebels 67
- 81: ideelle Zuglinie
- 82: ideeller Angriffspunkt des Pfluges
- 83: Schnittpunkt der ideellen Zuglinie 81 mit der geometrischen Hinterachse 44

## Patentansprüche

1. Pflug mit einem Pflugrahmen (15) an dem Pflugkörperhalter (49) mittels Verstellgetrieben (66) angebracht sind, die mit einer Stellstange (62) verbunden sind, die über eine, an ihr angelenkte, Kopplungsstange (63) mit einem Verstellglied (64) verbunden ist, das am Pflugrahmen (15) angelenkt ist und die zusammen eine Vorrichtung (61) zur Verstellung der Arbeitsbreite (48) aller Pflugkörper bilden und mit einem Gelenkviereck (35), das mit der Koppel (27) des Pfluges, die mit einer Dreipunktkupplung für die Unterlenker (38 und 39) und den Oberlenker eines Schleppers ausgestattet ist, über eine Konsole (30) des Wendekörpers (29) des Pfluges verbunden ist und aus einem Längslenker (2), der vom Rahmen (15) des Pfluges abgewandt ist und einem Längslenker (3), der dem Rahmen (15) des Pfluges zugewandt ist, besteht, die über die vorderen lotrechten Schwenkachsen (6 und 7), die in einem Abstand voneinander, an der Konsole (30), der kleiner ist als die Länge der Längslenker (2,3) und kleiner ist als der Abstand zwischen den lotrechten hinteren Schwenkachsen (9 und 10), angelenkt sind und an einer hinteren Querstrebe (14) mit der das Gelenkviereck (35) am Rahmen (15) des Pfluges über eine Schwenkachse (10) angelenkt und gegen den Rahmen (15) mit einem längenveränderbaren Einstellglied (22) abgestützt ist, **dadurch gekennzeichnet,** daß die Vorrichtung (61) zur Verstellung der Arbeitsbreite (48) aller Pflugkörper über einen Übertragungshebel (67), der mit dem Verstellglied (64) der Arbeitsbreitenverstellung und der Kopplungsstange (63) gelenkig verbunden ist, über eine Gelenkachse (73) mit der hinteren Querstrebe (14) des Gelenkviereckes (35) drehgelenkig verbunden ist, an dessen gelenkviereckseitigem Arm (69) über einen Anlenkpunkt (77) ein längenveränderbares Einstellelement (16) eingesetzt ist, dessen anderes Ende am Längslenker (3), der dem Rahmen (15) des Pfluges zugewandt ist, gelenkig angebracht ist, wobei auf dem gelenkviereckseitigen Arm (69) an einer weiteren Anlenkstelle (78) des Übertragungshebels (67) das längenveränderbare Einstellglied (22), zur Einstellung der Vorfurchenbreite, mit seinem vorderen Ende (23) drehgelenkig gelagert ist, und wobei die Anlenkstelle (78) zwischen dem längenveränderbaren Einstellglied (22) auf dem Übertragungshebel (67), bezogen auf die Vorrichtung (61) zur Verstellung der Arbeitsbreite (48) aller Pflugkörper, jenseits der Gelenkachse (73) und zwischen dieser und dem Anlenkpunkt (77) des längenveränderbaren Einstellelementes (16) zur Einstellung des Pfluges liegt.

2. Pflug nach Anspruch 1, dadurch gekennzeichnet, daß der Übertragungshebel (67) mit dem Ende (71) des verstellgliedseitigen Armes (68) an dem koppelstangenseitigen Ende (70) des Verstellgliedes (64) angelenkt ist.

3. Pflug nach einem oder mehreren der vorhergehenden Ansprüche, dadurch gekennzeichnet, daß der Übertragungshebel (67) eine Anlenkstelle (78) auf dem gelenkviereckseitigen Arm (69) aufweist, die mit ihrem Abstand zu der Gelenkachse (73) den verstellgliedseitigen Arm (80) bildet, mit dem das längenveränderbare Einstellglied (22) gelenkig verbunden ist.

4. Pflug nach einem oder mehreren der vorhergehenden Ansprüche, dadurch gekennzeichnet, daß der Übertragungshebel (67) bei Verstellung der Arbeitsbreite (48) aller Pflugkörper gleichzeitig über die Verstellung des Gelenkviereckes (35) zur Verstellung des Drehpoles (37) und des längenveränderbaren Einstellgliedes (22) zur Verstellung des Pflugrahmens (15) die Einstellung der Vorfurchenbreite (60) und die Lage des Schnittpunktes (83) der ideellen Zuglinie (81) mit der geometrischen Hinterachse (44) des Schleppers beibehält.

5. Pflug nach einem oder mehreren der vorhergehenden Ansprüche, dadurch gekennzeichnet, daß wenigstens der Anlenkpunkt (77) und/oder die Anlenkstelle (78) auf dem gelenkviereckseitigen Arm (69) des Übertragungshebels (67) durch Veränderung des jeweiligen Abstandes (75 und/oder 79) und damit das Längenverhältnis zum Abstand (74), vorzugsweise mit einer Schraubverstellung verstellbar ist.

## Claims

1. A plough with a plough frame (15), on which plough element supports (49) are arranged by means of adjusting gearing (66) connected with an adjusting rod (62), which is connected via a coupling rod (63) articulatedly connected to the adjusting rod with an adjusting member (64) articulatedly connected to the plough frame (15) and which together form a device (61) for adjusting the working width (48) of all plough elements, and with a four-bar linkage (35), which is connected via a bracket (30) of the turning element (29) of the plough with the connecting rod (27) of the plough, which rod is equipped with a three-point coupling for the lower steering rods (38 and 39) and the upper steering rod of a tractor, and said four-bar linkage (35) comprising a longitudinal steering rod (2) facing away from the frame (15) of the plough and a longitudinal steering rod (3) facing the frame (15) of the plough, said steering rods (2, 3) being articulatedly connected to the bracket (30) via the front vertical pivot axes (6 and 7) at a distance from one another, which is smaller than the length of the longitudinal steering rods (2, 3) and smaller than the distance between the vertical rear pivot axes (9 and 10), and to a rear transverse strut (14), by means of which the four-bar linkage (35) is articulatedly connected to the frame (15) of the plough via a pivot axis (10) and is supported against the frame (15) via a length-adjustable adjusting member (22), characterised in that the device (61) for adjusting the working width (48) of all plough elements via a transmission lever (67), which is hingedly connected with the adjusting member (64) of the working width adjustment and the coupling rod (63), is rotatably connected via a hinge axis (73) with the rear transverse strut (14) of the four-bar linkage (35), on whose arm (69) facing the four-bar linkage a length-adjustable adjusting element (16) is inserted via a hinge point (77), the other end of the length-adjustable adjusting element being hingedly connected to the longitudinal steering rod (3) facing the frame (15) of the plough, the length-adjustable adjusting member (22) being rotatably mounted with its front end on the arm (69) facing the four-bar linkage at a further hinge site (78) of the transmission lever (67) for adjusting the preliminary furrow width, and in relation to the device (61) for adjusting the working width (48) of all plough elements, the hinge site (78) between the length-adjustable adjusting member (22) and the transmission lever (67) lying on the other side of the hinge axis (73) and between the latter and the hinge point (77) of the length-adjustable adjusting element (16) for adjusting the plough.

2. A plough according to claim 1, characterised in that the transmission lever (67) is articulatedly connected with the end (71) of the adjusting member-side arm (68) to the coupling rod-side end (70) of the adjusting member (64).

3. A plough according to one or more of the preceding claims, characterised in that the transmission lever (67) comprises a hinge point (78) on the four-bar linkage-side arm (69), which with its distance from the hinge axis (73) forms the adjusting member-side arm (80), with which the length-adjustable adjusting member (22) is articulatedly connected.

4. A plough according to one or more of the preceding claims, characterised in that, when adjusting the working width (48) of all plough elements, the transmission lever (67) simultaneously maintains the adjustment of the preliminary furrow width (60) and the position of the point of intersection (83) of the ideal traction line (81) and the geometric rear axis (44) of the tractor, via the adjustment of the four- bar linkage (35) for adjusting the centre of rotation (37) and the adjustment of the length-adjustable adjusting member (22) for adjusting the plough frame (15).

5. A plough according to one or more of the preceding claims, characterised in that at least the hinge point (77) and/or the hinge site (78) on the four-bar linkage-side arm (69) of the transmission lever (67) is/are adjustable, preferably by means of a screw adjustment, by altering the respective distance (75 and/or 79) and therefore the ratio of length to the distance (74).

## Revendications

1. Charrue avec un bâti (15) auquel des supports (49) sont articulés au moyen d'engrenages ajustants (66) qui sont joints par une barre réglante (62) attachée au moyen d'une biellette de couplage (63) articulée à celle-ci avec un vérin de commande (64) qui est articulé au bâti (15) et qui forment ensemble un dispositif (61) pour le réglage de la largeur de labourage (48) de tous les corps de labourage et ce dispositif étant joint à une liaison à quatre barres (35) attachée à la tête d'attelage (27) de la charrue, munie d'un couplage à trois points, prévus pour les barres d'attelage inférieures (38 et 39) et celle supérieure, au moyen d'une console (30) du pivot (29) de la charrue et cette liaison (35) consistante en une biellette de commande longitudinale (2) détournée du bâti (15) de la charrue et une bielle de commande longitudinale (3) tournée vers le bâti (15) de la charrue qui sont articulées à la console (30) par des axes pivotantes verticales antérieures (6 et 7) à une distance l'une de l'autre inférieure à la longueur des bielles de commande (2,3) et inférieure à la distance entre les axes pivotantes verticales postérieures (9 et 10) et à une traverse postérieure (14) par laquelle la liaison à quatre barres (35) est articulée au bâti (15) de la charrue au moyen d'une axe pivotante (10) et soutenue contre le bâti (15) par un vérin de commande extensible (22) caractérisée par le fait que le dispositif (61) pour le réglage de la largeur de labourage (48) de tous les corps de labourage est articulé par un levier de transmission (67) lequel est articulé avec le vérin de commande (64) du réglage de la largeur de labourage (48) et avec la biellette de couplage (63) et articulé par une axe articulière (73) avec la traverse postérieure (14) de la liaison à quatre barres (35), au bras du levier mentionné tourné vers la liaison à quatre barres (35) étant inséré par un point d'articulation (77) un élément de commande extensible (16), l'autre extrémité duquel étant articulé à la bielle de commande longitudinale (3) tournée vers le bâti (15) de la charrue, tel que sur le bras tourné vers la liaison à quatre barres (69) le vérin de commande extensible (22) est installé articulièrement, pour le réglage de la largeur du premier sillon, avec son extrémité antérieure (23) à un ulterieur point d'articulation (78) du levier de transmission (67) et tel que le point d'articulation (78) se trouve entre le vérin de commande extensible (22) sur le levier de transmission (67) et le point d'articulation (77) de l'élément de commande extensible (16) pour le réglage de la charrue et, par rapport au dispositif (61) pour le réglage de la largeur de labourage (48) de tous les corps de labourage, de l'autre côté de l'axe articulière (73).

2. Charrue selon la revendication 1, caractérisée en ce que le levier de transmission (67) est articulé avec l'éxtrémité (71) du bras (68) tourné vers le vérin de commande (64) à l'éxtrémité (70) duquel tournée vers la biellette de couplage (63).

3. Charrue selon une ou plusieures des revendications précédentes, caractérisée en ce que le levier de transmission (67) est muni d'un point d'articulation (78) sur son bras (69) tourné vers la liaison à quatre barres (35) qui forme ensemble à sa distance jusqu'à l'axe articulière (73) le bras (80) tourné vers le vérin de commande extensible (22) articulé au dernier.

4. Charrue selon une ou plusieures des revendications précédentes, caractérisée en ce que le levier de transmission (67) garde l'ajustage de la largeur (60) du premier sillon et la position du point de coupe (83) du trait virtuel de la force de traction (81) et de l'axe géométrique (44) de l'essieu arrière du tracteur au moyen de l'ajustement de la liaison à quatre barres (35) pour l'ajustement du pôle (37) virtuel de celle et du vérin de commande extensible (22) pour l'ajustement du bâti (15) au changement simultané de la largeur de labourage (48) de tous les corps de labourage.

5. Charrue selon une ou plusieures des revendications précédentes, caractérisée en ce que au moins le point d'articulation (77) et/ou le point d'articulation (78) sur le bras (69) tourné vers la liaison à quatre barre (35) du levier de transmission (67) est ajustable de préférence au moyen d'une vis de réglage, par le changement de la distance respective (75 et/ou 79) et, avec ladite, la rélation à la distance (74) sur le bras (69) du levier de transmission (67).
